# EUROPEAN PATENT APPLICATION

(11) **EP 0 657 685 A1**
(43) Date of publication of application: **14.06.1995**
(21) Application number: 94307705.7
(22) Date of filing: 20.10.1994
(51) Int. Cl.: F21V 8/00, F21V 19/04

(54) **Easy to replace high brightness light source for use with light distribution system**

(30) Priority: 12.11.1993 US 153002
(71) Applicant: GENERAL ELECTRIC COMPANY, Schenectady, NY 12345 (US)
(72) Inventor: Cassarly, William James, Richmond Heights, Ohio 44143 (US); Hansler, Richard Lowell, Pepper Pike, Ohio 44124 (US); Davenport, John Martin, Lyndhurst, Ohio 44124 (US); Miller, Allen (NMN), Peachland, British Columbia Vo (CA)
(74) Representative: Pratt, Richard Wilson

(57) **Abstract**

A lighting system incorporates a replaceable module (50) that carries a light source (10) and reflector (24). A mounting assembly (52) and the module (50) have cooperating components (66,68,70,74,76) that quickly and accurately locate the module (50) relative to an input end (62) of the light distribution arrangement. In the preferred embodiment, the light distribution arrangement includes a light conductor (54) that is fixed on the mounting assembly (52) so that positioning a replacement module (50) on the mounting assembly (52) accurately locates the input end (62) of the light conductor (54) at one of the foci of the reflector.

## Description

### Background of the Invention

This invention pertains to the art of high brightness light systems and more particularly to an easily replaceable light source module that provides for accurate and repeatable alignment of the light source with a light distribution system.

The invention is particularly applicable to a high brightness light source such as an arc discharge lamp used in a central lighting system and will be described with particular reference thereto. However, it will be appreciated that the invention has broader applications and may be employed in related environments and applications.

Central lighting systems wherein a single light source is used to supply light to a light distribution apparatus is known in the art. In fact, the light distribution apparatus will usually incorporate one or more optical light conductors, such as optical tubes, rods, or fibers, to transmit the light from the centrally located source to one or more remote locations. For example, commonly assigned U.S. Patent No. 4,958,263 issued to Davenport, et al. discloses the use of a central lighting system for an automotive application. The subject invention, however, should not be considered as being limited to automotive applications but will find widespread applicability wherever centralized light sources using a light distribution member for transmitting the source light to a remote location is desired.

Transmission losses associated with conveying light from the source to a remote location necessitate employing a suitable light source having a high brightness characteristic. For example, a known high brightness light source provides in excess of 50,000 lumens per square centimeter and is more particularly described in commonly assigned U.S. Patent No. 5,239,230 to Mathews, et al. The source is used in conjunction with a reflector, such as an ellipsoidal shaped reflector where the light source is located at one focus of the reflector and an input end of the light distribution apparatus is advantageously located at the second focus of the ellipsoidal reflector. In other related arrangements, a mirror may be interposed between the reflector and input end of the light distribution apparatus so that different orientations and light control arrangements may be achieved.

The lamp will burn out after extended use thereby requiring replacement. As will be appreciated, the spatial orientation of the light source and reflector relative to the input end of the distribution apparatus is extremely important. In fact, in order to efficiently use the high brightness light source, oftentimes a manufacturer rigidly secures these components together so that light collection and distribution efficiency for a lighting system is maximized. Additionally, replacement of the light source is often extremely labor intensive because of the need to maintain the desired geometry of the light source, reflector, and input end of the light distribution system. A need exists, therefore, for an easy to replace light module.

The conveniences and advantages offered by a central lighting system must also be maintained when replacement of the light source becomes necessary. The light source may be mounted at locations that are not easily accessible so that undue time, manipulation and difficulties can be avoided after initial set up. Moreover, it is desirable to limit the number and types of tools necessary to complete the replacement. In fact, the elimination of tools in the replacement process would be most desirable.

### Summary of the Invention

The present invention contemplates a new and improved central lighting system that overcomes all of the above-referenced problems and others and provides an easily replaceable light source that is accurate and repeatedly aligned with a light distribution apparatus.

According to the present invention, the lighting system has a replaceable light source module that includes a light source and reflector that directs the light in a desired manner. A mounting assembly has a stop surface that quickly and accurately locates the replaceable module at a predetermined position so that light directed by the reflector is efficiently collected at an input end of the light distribution system.

According to a more limited aspect of the invention, a slot and groove arrangement are provided on the mounting assembly and module to provide for ease of assembly and disassembly.

According to another aspect of the invention, a biasing member is provided to urge the module against the stop surface and provide positive feedback to maintenance personnel replacing the light source module.

A principal advantage of the invention is the ability to quickly and easily replace the light source without effecting the remainder of the light system.

Yet another advantage of the invention is the positive feedback provided to a person who replaces the module.

Still other advantages and benefits of the invention will become apparent to those skilled in the art upon a reading and understanding of the following detailed description.

### Brief Description of the Drawings

The invention may take physical form in certain parts and arrangements of parts, preferred embodiments of which will be described in detail in this specification and illustrated in the accompanying drawings which form a part hereof, and wherein:
FIGURE 1 is an elevational schematic representation of a prior art arrangement;
FIGURE 2 is a perspective view of a replaceable light source module prior to receipt on a mounting bracket of a light distribution apparatus;
FIGURE 3 is a perspective view similar to that of FIGURE 2 but illustrating the module in its mounted position; and
FIGURE 4 is a detailed view of a retaining means that biases the replaceable module toward a stop surface.

### Detailed Description of the Preferred Embodiments

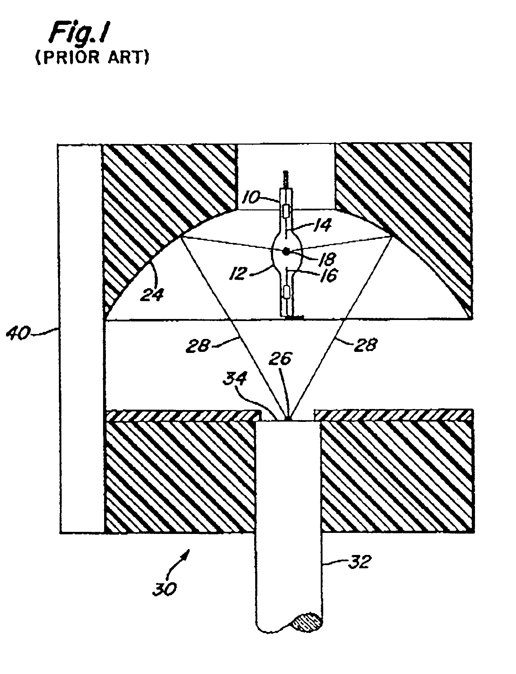

Referring now to the drawings wherein the showings are for the purposes of illustrating the preferred embodiments of the invention only and not for purposes of limiting same, the FIGURES show a lighting system **A** that provides a replaceable light module light to one or more remote locations and that employs an easily removable light source module. More particularly, and with reference to a prior art arrangement shown in FIGURE 1, a high brightness light source **10** is preferably a high intensity discharge lamp in which an envelope **12** has a chamber receiving a pair of spaced electrodes **14**, **16** and emits light having high brightness characteristics. Reference may be made to commonly assigned U.S. Patent No. 5,239,230 of Mathews, et al. which disclosure is incorporated herein by reference. The '230 patent describes a high intensity discharge arc tube light source that achieves a light output on the order of 50,000 lumens per square centimeter. Thus, it has particular applicability to a central lighting system where the high brightness light emitted by the source is efficiently and effectively conveyed to one or more remote locations.

The arc discharge lamp **10** is preferably located so that the arc gap **18** defined between the electrodes is located at one focus of reflector **24**. Preferably, the reflector has an ellipsoidal shape so that when the lamp is located at the first focus of the reflector, light emitted therefrom is directed toward the second focus **26** as shown by representative light rays **28**. A light distribution apparatus **30** includes one or more light conductors **32** which may be rods, fibers, or light guides used to convey light received at an input end **34** thereof to a remote location (not shown).

As will be appreciated, it is important that the input end of the light conductor be accurately located at the second focus **26** of the light source/reflector system to maximize the amount of light that enters the light distribution apparatus. Accordingly, prior arrangements rigidly mount the light source, reflector, and input end of the light conductor together to take advantage of the preferred geometry between the components. This prior art arrangement is represented by a rigid mounting structure **40** in FIGURE 1. The mounting structure, in turn, forms an integral part of a larger housing or is secured to a housing through the use of fasteners or the like. A manufacturer preferably positions the lamp at the first focus of the reflector and secures the lamp and reflector in a rigid manner to the mounting structure **40**. Likewise, the mounting structure fixedly secures the input end of the light conductor at the second focus. Thus, the various components of the central lighting system are fixed in place.

In modified arrangements, provision is made for selective removal of the light conductor **32** from the mounting structure. The light source, reflector, and mounting structure is then disassembled from an external housing (not shown) and a new mounting structure, light source, and reflector brought into place. The input end of the light conductor is then inserted into the mounting structure and secured in place by a set screw or other clamping arrangement. This, of course, results in assembly and disassembly that are unnecessarily labor-intensive. Maintenance personnel must typically remove the input end of the light guide from the mounting structure. Then, a set of fasteners are removed from the mounting structure so that it could, in turn, be separated from the housing. The process is then repeated in reverse, along with necessary adjustment of the various components to precisely align the source, reflector, and light distribution apparatus.

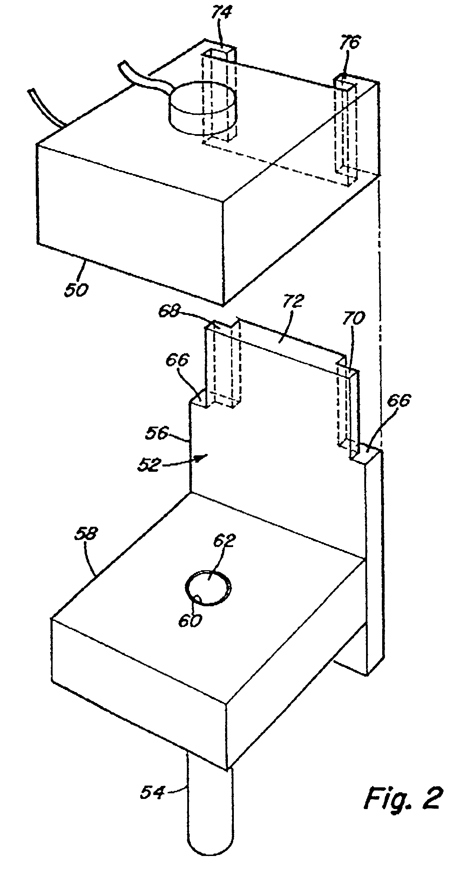

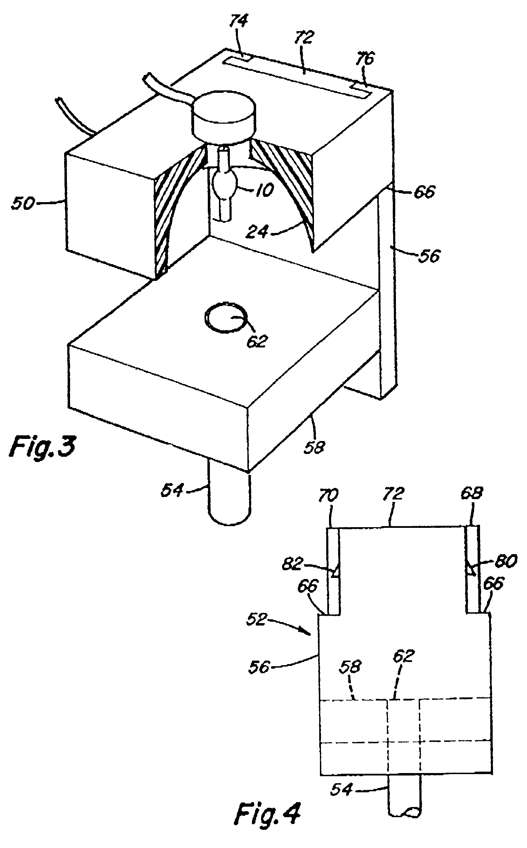

In accordance with the subject invention shown in FIGURES 2 and 3, this arrangement is modified. Particularly, a light source module **50** which is shown partially broken away in FIGURE 2. As shown there, the module encloses a light source **10** and reflector **24** therein. The general operation and advantages offered by the light source and reflector assembly as described above are equally applicable here. The module is a self-contained unit that can be manufactured and sold as a replaceable component in the overall central lighting system.

Separate and apart from the module, the lighting system includes a mounting structure **52** to which the light distribution apparatus **54** is rigidly secured. In the preferred illustrated embodiment, the mounting structure includes an elongated plate **56** that is rigidly secured to platform **58**. The platform has an opening **60** that receives input end **62** of the light conductor **54**. Preferably, the light conductor is rigidly secured to the platform so that it is not removable therefrom.

The mounting structure incorporates a stop surface **66** which is located on the plate **56** at a predetermined distance or height above the platform. A pair of reduced dimension flanges **68**, **70** are disposed on opposite sides of a central region **72** to receive a pair of L-shaped arms **74**, **76**, respectively, provided on the module **50**. The arms **74**, **76** are received over the flanges **68**, **70** so that the module may be slid in place over the plate. The mounting plate is preferably vertically oriented to take advantage of gravity and urge the module into engagement with stop surface **66**. Once the module engages the stop surface, further axial advancement of the module toward the platform is prevented.

As shown in FIGURE 3, the stop surface accurately positions the module so that the input end of the light conductor held in the platform is located at the second focus of the reflector. Should the light source burn out or otherwise require replacement, the module can be easily removed by sliding it upwardly relative to the plate **56**. A new module can then be slid into place, and accurately and easily aligned with the input end of the light conductor in the same manner as described above.

Although in the illustrated preferred arrangement, the plate is oriented in vertical fashion so as to take advantage of gravity and urge the module against the stop surface **66**, still other arrangements are possible. For example, non-vertical arrangements are also contemplated. In selected vertical and non-vertical embodiments, however, some type of positive feedback is required to let maintenance personnel know that the module has been completely and accurately positioned on the mounting structure. As shown in FIGURE 4, a retaining means defined by a pair of spring fingers may be used to urge the module against the stop surface **66**. More particularly, the dimension of the upper portion of the plate is extended and a pair of spring fingers **80**, **82** extend from the central region **72** into the path adjacent the flanges **68**, **70**. As the module is advanced over the plate, tapered edges of the spring fingers **80**, **82** are engaged by the arms. Once a predetermined force has been reached overcoming the outward bias of the springs and retracting the fingers from adjacent the flanges, continued insertion of the module over the plate occurs. Once the module abuts against stop surface **66**, the spring fingers move outwardly over the arms **74**, **76** providing a positive feedback to the maintenance personnel that the module has been properly seated. Moreover, the spring fingers then serve to continually urge the module against the stop surface. To remove the module, the spring fingers are manually depressed as the module is lifted from the plate and the installation process repeated as a replacement module is brought into position.

As will be appreciated, the subject arrangement provides a repeatable, accurate alignment of the module relative to the light distribution system. Particularly, the input end of the light conductor will be fixed in place in the platform. Once the module **50** engages the stop surface **66**, predetermined dimensioning assures that the input end of the light conductor is located at the second focus of the reflector while the light source, carried by the module, is located at the first focus of the reflector. In fact, this preferred arrangement allows maintenance personnel to replace a burned out light source with one hand and without altering the remainder of the lighting system.

The invention has been described with reference to the preferred embodiments. Obviously, modifications and alterations will occur to others upon a reading and understanding of this specification. It is intended to include all such modifications and alterations insofar as they come within the scope of the appended claims or the equivalents thereof.

## Claims

1. A lighting apparatus for providing light to at least one remote location, the lighting apparatus comprising:
a modular, selectively removable housing;
a light source received in the housing;
a reflector received in the housing and disposed to receive light from the light source and direct the light in a predetermined manner from the housing;
a light distribution apparatus having an input end receiving light from the reflector and distributing light to a remote location from the housing; and
a mounting assembly selectively receiving the housing in a predetermined relationship relative to the input end of the light distribution apparatus so that mere replacement of the housing on the mounting assembly properly orients the light source relative to the input end of the light distribution apparatus.

2. The lighting apparatus as defined in claim 1 wherein the mounting assembly and the input end of the light distribution apparatus are rigidly secured together.

3. The lighting apparatus as defined in claim 2 wherein the mounting assembly includes a stop surface that engages the housing and limits further advancement of the housing toward the input end of the light distribution apparatus.

4. The lighting apparatus as defined in claim 3 further comprising means for retaining the housing against the stop surface.

5. The lighting apparatus as defined in claim 4 wherein the retaining means includes a spring urging the housing against the stop surface.

6. The lighting apparatus as defined in claim 3 wherein the stop surface is spaced from the input end of the light distribution apparatus.

7. The lighting apparatus as defined in claim 1 wherein the housing and mounting assembly have a slot and groove attachment permitting ease of mounting the housing thereto.

8. The lighting apparatus as defined in claim 7 wherein the slot and groove attachment are vertically oriented and the mounting assembly includes a stop surface that limits advancement of the housing toward the input end of the light distribution apparatus.

9. The lighting apparatus as defined in claim 7 further comprising means for retaining the housing and mounting assembly together.
